# EUROPÄISCHE PATENTSCHRIFT

(11) **EP 1 466 829 B1**
(45) Veröffentlichungstag und Bekanntmachung des Hinweises auf die Patenterteilung: **04.05.2011**
(21) Anmeldenummer: 04007033.6
(22) Anmeldetag: 24.03.2004
(51) Int. Cl.: B65B 51/22, B65B 1/18

(54) **Rotierende Füllmaschine mit Verschliessvorrichtung**
Rotary filling machine with closure device
Machine rotatif de remplissage avec dispositif de fermeture

(30) Priorität: 09.04.2003 DE 20305725 U
(43) Veröffentlichungstag der Anmeldung: 13.10.2004
(73) Patentinhaber: Haver & Boecker, 59302 Oelde (DE)
(72) Erfinder: Vollenkemper, Willi, 59302 Oelde (DE)
(74) Vertreter: Dantz, Jan Henning

(56) Entgegenhaltungen:
- EP-A- 1 010 619
- EP-A- 1 164 079
- CH-A- 692 288
- DE-U- 20 206 429

## Beschreibung

Die Erfindung betrifft eine Anlage zum Füllen von Ventilsäcken und anschließendem Verschließen der Ventile, die mit einer rotierenden Füllmaschine ausgestattet ist, die einen Rotor enthält, der mit mehreren Füllrohren bestückt ist, auf die die Ventile der zu füllenden Ventilsäcke aufsteckbar sind, wobei die Anlage derart ausgelegt ist, dass die Ventile mittels einer einzigen, im Ultraschallverfahren arbeitenden, einen Amboss und eine Sonotrode aufweisenden sowie außerhalb des äußeren Drehkreises des ventilsackfreien Rotors verstellbar aufgestellten Ventilverschließeinrichtung verschließbar sind.

Die in Rede stehende Anlage ist in der Abfülltechnik allgemein bekannt. Die rotierende Füllmaschine ist der Hauptbestandteil der Anlage. Die Anzahl der Füllrohre und die Anzahl der Füllaggregate richtet sich nach der geforderten Leistung. Von der Verfahrenstechnik unterscheidet man zwischen einem sogenannten Luftpacker, bei dem dem Füllgut. Luft zugeschlagen wird, um es fließfähig zu machen, und einem sogenannten Turbinenpacker, bei dem mit einem Flügelrad das Füllgut transportiert wird. Unabhängig von diesen Unterschieden wird gefordert, dass die Ventile dicht verschlossen sind. Es ist deshalb bekannt, die Ventilinnenflächen von aus Papier gefertigten Ventilsäcken entweder mit einem thermoplastischen Werkstoff zu beschichten oder einen Schlauch aus thermoplastischem Material in das Ventil einzubringen oder in den Boden einen Schlauch aus einem thermoplastischen Material einzulegen. Derartige Ventile können dann mit einer nach dem ultraschallschweißverfahren arbeitenden Verschließeinrichtung verschlossen werden. Derartige Verschlüsse haben den Vorteil, dass sie relativ hoch belastbar sind und dass sie darüber hinaus staubdicht sind.

Bei den bislang bekannten, in der Praxis ausgeführten Anlagen ist jedem Füllrohr eine Ventilverschließeinrichtung zugeordnet. Derartige Anlagen haben sich in der Praxis zwar bestens bewährt, da jedoch die Anzahl der Füllrohre bzw. der Füllaggregate bis zu 16 Stück betragen kann, bildenden die Verschließeinrichtungen bei einer solchen Anlage einen relativ hohen Kostenanteil. Dies gilt insbesondere dann, wenn die Verschließeinrichtungen nach dem Ultraschallschweißverfahren arbeiten.

Zur Reduzierung des konstruktiven Aufwandes und der Kosten ist aus der EP 1 010 619 A1 eine rotierende Füllmaschine zum Füllen von Ventilsäcken bekannt, die mit einer Ventilverschließeinrichtung zum Verschließen aller Ventile der von den Füllrohren abgestoßenen Ventilsäcke ausgestattet ist. Die Ventilverschließeinrichtung arbeitet im Ultraschallschweißverfahren und ist mit einem Amboss und einer Sonotrode ausgestattet. Die Füllmaschine ist mit einer sich über einen vor dem Austrageband liegenden Führung für die Ventilverschließeinrichtung ausgestattet. Diese Führung verläuft konzentrisch zur Drehachse des Rotors der Füllmaschine. Die Ventilverschließeinrichtung liegt außerhalb des ventilsackfreien Rotors und oberhalb der Umlaufbahn der auf die Füllrohre aufgesteckten Ventilsäcke. Nach dem Abstoßen eines Ventilsackes von Füllrohr wird die Ventilverschließeinrichtung abgesenkt, so dass der Amboss und die Sonotrode den Verbindungsbereich des Ventiles einklemmen. Die Ventilverschließeinrichtung folgt der Drehbewegung des Rotors innerhalb der Führung während des Verschließvorganges. Nach dem Ende des Verschließvorganges wird die Ventilverschließeinrichtung innerhalb der Führung entgegen der Drehbewegung des Rotors in die Ausgangsstellung zurückbewegt und wieder angehoben.

Der konstruktive Aufwand und somit auch die anfallenden Kosten sind bei dieser Füllmaschine für die Verschließeinrichtung entsprechend hoch. Insbesondere durch die oszillierende Bewegung der Ventilverschließeinrichtung innerhalb der Führung ist die Leistung der Füllmaschine begrenzt, da die Bewegungsabläufe zeitlich hintereinander erfolgen.

Aus der DE 202 06 429 U1 ist eine rotierende Füllmaschine zum Füllen von Ventilsäcken bekannt, die mit einer Kontrolleinrichtung für eine Absaugvorrichtung und einer weiteren Kontrolleinrichtung zur Feststellung eines zwischen der Sonotrode und dem Amboss der Ultraschallschweißeinrichtung liegenden Ventilbereich des Sackes ausgestattet ist. Solche Kontrollvorrichtungen lassen sich bei allen Ventilverschließeinrichtungen unabhängig von der Auslegung der rotierenden Füllmaschine einsetzen.

Der Erfindung liegt die Aufgabe zugrunde, eine Anlage der eingangs näher beschriebenen Art so zu gestalten, dass ohne negative Beeinträchtigung des Ventilverschlusses in konstruktiv einfacher Weise der technische Aufwand und somit auch die Kosten vermindert werden.

Die gestellte Aufgabe wird dadurch gelöst, dass die Verschließeinrichtung im Normalbetrieb zumindest teilweise sowie stationär in der Umlaufbahn der auf die Füllrohre des Rotors aufgesteckten Ventilsäcke liegt, dass die Ventilverschließeinrichtung mit Führungs- und/oder Formelementen für die Verschließbeireche der Ventile der kontinuierlich durchlaufenden Ventilsäcke versehen ist, und dass die Ventilverschließeinrichtungen bei Durchlauf eines nicht vollständig gefüllten, während einer weiteren Drehung des Rotors auf dem Füllrohr verbleibenden Ventilsackes ausschließlich längs einer ortsfesten Führungsbahn aus der Umlaufbahn der Ventilsäcke verfahrbar ist.

Die Ventilverschließeinrichtungen ist nunmehr so ausgelegt, dass die mittels aller Füllrohre der rotierenden Füllmaschine gefüllten Säcke nacheinander kontinuierlich hindurchlaufen, wobei das Ventil dann verschlossen wird. Dadurch wird der konstruktive Aufwand wesentlich vermindert. Als äußerer Drehkreis des ventilsackfreien Rotors wird der von den freien Enden der Füllrohre durchlaufene Kreis angesehen. Da die Verschließeinrichtungen außerhalb dieses Kreises steht, wird die Rotation nicht behindert. Im normalen Betrieb steht die Ventilverschließeinrichtung stets an gleicher Stelle bzw. auch in gleicher Höhe, so dass sie als stationär angesehen werden kann. Zur Anpassung bzw. Einstellung auf unterschiedliche Sackformate ist jedoch eine entsprechende Verstellung notwendig. Gleiches gilt, wenn ein Ventilsack nicht rechtzeitig gefüllt ist, und er noch während einer weiteren Drehung des Rotors am Füllrohr verbleibt, wie noch näher erläutert wird. Die Führungs- und/oder die Formelemente sind notwendig, damit zunächst das Ventil flach gelegt wird, da es sich nicht selbsttätig in die flache Lage verformt, da die durch Faltung und Klebung gebildeten Böden von Ventilsäcken eine hohe Eigensteifigkeit haben können. Die Führungselemente sind auch noch im Zusammenwirken mit den Formelementen notwendig, damit das Ventil lagegerecht durch den Spalt zwischen dem Amboss und der Sonotrode der Ultraschallschweißeinrichtung geführt wird. Nach dem Durchlaufen der Führungs- und Formelemente ist das Ventil flach gelegt, und es liegt in der Ebene oder etwa in der Ebene des Bodens.

Damit der Weg nach dem Abschieben der Ventilsäcke von den Füllrohren bis hin zur Ventilverschließeinrichtungen möglichst gering ist, ist vorgesehen, dass die Ventilverschließeinrichtungen zumindest noch teilweise in der Umlaufbahn der auf die Füllrohre aufgesteckten Ventilsäcke liegt. Dies ist ohne weiteres möglich, da im Normalbetrieb der Füllvorgang rechtzeitig beendet ist, so dass das Abschieben vor Erreichen des Bereiches der Ventilverschließeinrichtung erfolgen kann. Die Einstellung wird begünstigt, wenn die Ventilverschließeinrichtung längs einer ortsfesten Führungsbahn verfahrbar ist. Dazu ist es besonders vorteilhaft, wenn die Ventilverschlusseinrichtung mit einem entsprechend ausgelegten Stellantrieb versehen ist. Dieser Antrieb kann dann auch so ausgelegt sein, dass die Ventilverschließeinrichtung aus der Umlaufbahn der Ventilsäcke herausgefahren wird, wenn beispielsweise ein nicht vollständig gefüllter Ventilsack während einer weiteren Drehung des Rotors auf dem Füllrohr verbleibt.

Damit die von den Füllrohren abgeschobenen Ventilsäcke, wenn überhaupt, nur unwesentlich angehoben oder abgesenkt werden müssen, ist vorgesehen, dass der von dem Amboss und der Sonotrode der Ventilverschließeinrichtungen gebildete Durchlaufspalt höhenmäßig im Bereich der Mittellängsachsen der Füllrohre liegt. Gemäß einer bevorzugten konstruktiven Gestaltung ist vorgesehen, dass die Führungselemente aus einem von oben auf den Verschließbereich des Ventils aufsetzbar Andrückelement gebildet ist, welches um eine horizontale sowie quer zur Durchlaufrichtung der Ventilsäcke stehende Achse schwenkbar ist, und dass die Formelemente aus einem Streck- und Glättelement bestehen, welches um eine in der Durchlaufrichtung der Ventilsäcke verlaufende Achse rotierend antreibbar ist, und das Ventil von unten, von dem dem Ventilboden gegenüberliegenden Boden in einen flachen Zustand verformbar ist. Die Formelemente unterstützen auch gleichzeitig die Führungselemente, so dass in deren Zusammenwirken die Ventilsäcke im Ventilbereich exakt geführt sind. Das Andrückelement ist einfachster Ausführung als Andrückplatte ausgebildet. Damit ein Einführkeil gebildet wird, ist vorgesehen, dass die Schwenkachse des Andrückelementes, bezogen auf die Durchlaufrichtung der Ventilsäcke, im hinteren Bereich liegt. Bevor der Ventilbereich des Ventilsackes in den Bereich der Andrückplatte transportiert wird, steht diese in einer Schräglage. Sobald der Ventilsack eingelaufen ist, wird sie in eine horizontale oder annähernd horizontale Stellung geschwenkt. Die Steuerung erfolgt in bekannter Weise über Lichtschranken. Das Andrückelement könnte auch als Andrückschuh ausgebildet sein. Die Schwenkbewegung wird in einfachster Weise von einer Kolbenzylindereinheit abgeleitet, so dass eine gleichbleibende Anpresskraft erzeugt wird. Das Streck- und Glättelement ist unterhalb des Führungselementes angeordnet. In einfachster Weise besteht es aus einem rotierend antreibbaren Käfig oder einer rotierend antreibbaren Bürste, der bzw. die sich zur Einlaufseite des Ventil hin verkleinert. Im Zusammenwirken mit der Andrückplatte wird dadurch ein Einlaufkeil für den Ventilbereich des Ventilsackes gebildet. Die Drehrichtung des Streck- und Glättelementes ist so, dass die Materiallagen nach außen gezogen werden, d. h. in Durchlaufrichtung der Ventilsäcke gesehen dreht sich das Streck- und Glättelement im Uhrzeigersinn. Bei der erfindungsgemäßen Anlage ist der Rotor so ausgelegt, dass nach dem Abschieben des gefüllten Sackes vom Füllrohr dieser durch die Drehbewegung des Rotors weitertransportiert wird. Dazu ist der Rotor mit entsprechenden Mitnahmeelementen ausgestattet. Da das Verschweißen der Ventile im Durchlaufverfahren erfolgt, ist vorgesehen, dass der Amboss der UltraschallschweiBeinrichtung als rotierend antreibbares Ambossrad ausgebildet und auf einer ortsfesten rotierend antreibbaren Welle drehfest aufgesetzt ist. Damit keine Berührung zwischen der Sonotrode der Ultraschallschweißeinrichtung und dem Amboss erfolgt, ist vorgesehen, dass die Ultraschallschwenkeinheit an einem Schwenkhebel angeordnet ist, und dass der Abstand zwischen dem Ambossrad und der Sonotrode mittels eines einstellbaren Anschlages einstellbar ist, wobei eine definierte Andrückkraft durch eine Kolben-Zylinder-Einheit erzeugbar ist. Es ist nicht notwendig, dass der Amboss als Rad ausgebildet und rotierend antreibbar ist, sondern es kann auch zumindest die Sonotrode der Ultraschallschweißvorrichtung als rotierend antreibbares Sonotrodenrad ausgebildet sein, wobei dann der Amboss, die Sonotrode, die Führungs- und die Formelemente an der dem Rotor der Anlage abgewandten Seite angeordnet sind. Damit eine optimale Einstellung gewährleistet ist, ist vorgesehen, dass die gesamte Baueinheit das Ambossrad und/oder das Sonotrodenrad und das Glättelement unabhängig durch Einzelantriebe antreibbar sind. Die Einzelantriebe enthalten einen Servomotor. Schließlich ist noch vorgesehen, dass die Verschließeinrichtung als Baueinheit an einer Konsole angeordnet und mittels eines Antriebes höhenverstellbar ist. Diese Höhenverstellung dient nicht nur der Justierung auf die jeweilige Sackgröße, sondern auch zur Freigabe des Umlaufes eines noch am Füllrohr hängenden, teilweise gefüllten Sackes.

Anhand der beiliegenden Zeichnungen wird die Erfindung noch näher erläutert. Es zeigen:
- Fig. 1: eine erfindungsgemäße Anlag als Schemaskizze in einer Draufsicht;
- Fig. 2: das Füllrohr einer rotierenden Füllmaschine sowie den abgenommenen Ventilsack und die Verschließeinrichtung in einer ersten Ausführung mit einer feststehenden Sonotrode;
- Fig. 3: das Füllrohr einer rotierenden Füllmaschine, den abgenommenen Ventilsack und die Verschließeinrichtung in einer zweiten Ausführung mit einer rotierend antreibbaren Sonotrode;
- Fig. 4: die Verschließeinrichtung in einer Seitenansicht mit Blick auf die einzelnen Aggregate;
- Fig. 5: eine der Fig. 4 entsprechende Stimansicht in Richtung des Pfeiles 5 in der Fig. 4 gesehen;

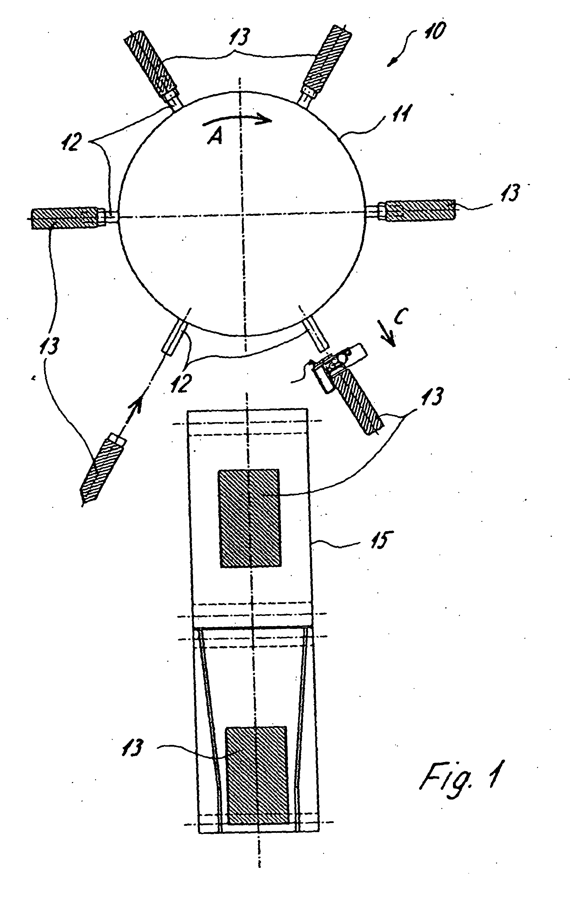

Die in der Fig. 1 dargestellte Anlage 10 besteht aus einem in Pfeilrichtung A rotierend antreibbaren Rotor 11, der im dargestellten Ausführungsbeispiel mit sechs Füllrohren 12 bestückt ist. Entgegen der Darstellung könnte der Rotor 11 auch mit einer größeren Anzahl von Füllrohren 12 bestückt werden. Die Anlage ist außerdem mit einer nicht dargestellten Aufsteckvorrichtung ausgestattet, die radial zum Rotor 11 steht, um die zu füllenden Ventilsäcke 13 auf die Füllrohre 12 aufzustecken. Dieser Aufsteckvorgang ist durch den auf die Drehachse des Rotors 11 gerichteten Pfeil B angedeutet. Die Anlage 10 ist außerdem mit einer Ventilverschließeinrichtung 14 ausgestattet. Diese steht in Drehrichtung A des Rotors 11 gesehen, vor der Aufsteckvorrichtung. Zwischen der Aufsteckvorrichtung und der Ventilverschließeinrichtung 14 ist ein andeutungsweise dargestelltes Austrageband 15 angeordnet, um die Ventilsäcke 13 nach dem Verschließen der Ventile flachliegend abzutransportieren. Die gefüllten Ventilsäcke 13 werden in Drehrichtung A des Rotors 11 gesehen, in einem ausreichenden Abstand von den Füllrohren 12 abgeschoben, wie durch den Pfeil C angedeutet ist. In nicht dargestellter Weise werden die Ventilsäcke kontinuierlich durch die Drehung des Rotors weitertransportiert, wobei die zu verschließenden Ventile durch die Ventilverschließeinrichtung 14 geführt werden. Anschließend werden die Ventilsäcke 13 auf den Austrageförderer 15 geworfen.

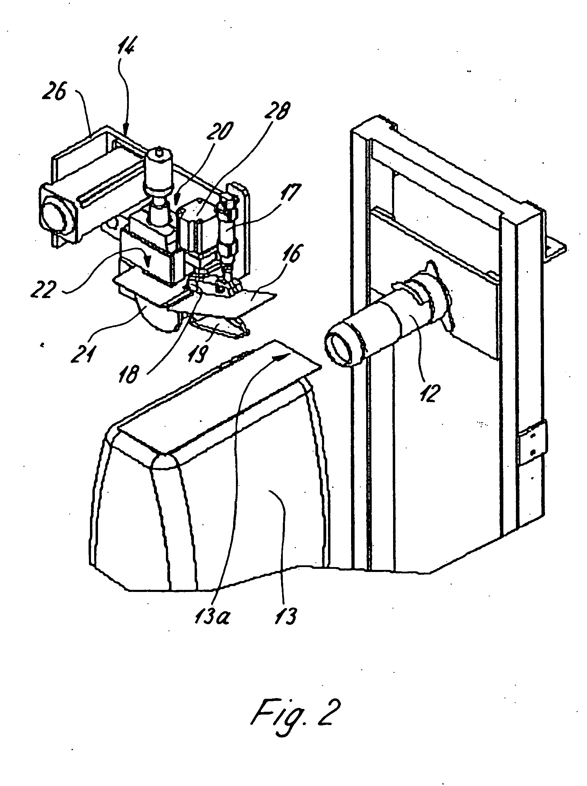

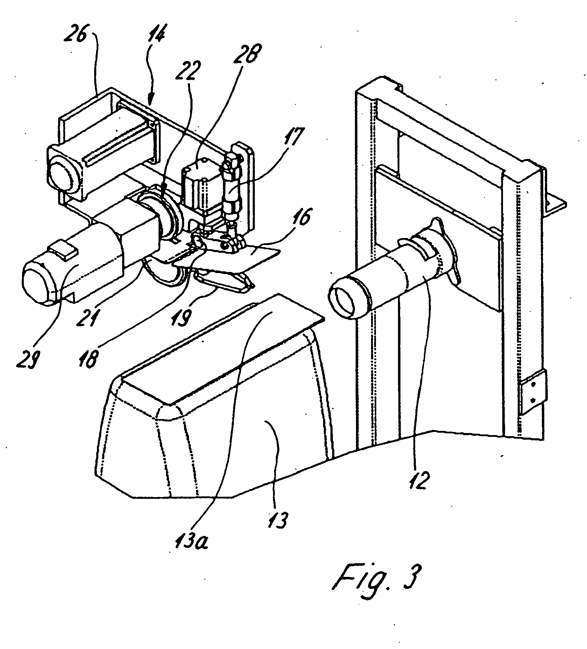

Die Fig. 2 zeigt den vom Füllrohr 12 abgenommenen, gefüllten Ventilsack 13. Das Ventil 13a steht gegenüber der zugeordneten Schmalseite des Ventilsackes 13 ein klein wenig vor. Die Figuren zeigen, dass die Ventilverschließeinrichtung 14 außerhalb des durch die freien Enden der Füllrohre 12 bestimmten Drehkreises liegt. Entgegen den Darstellungen gemäß den Figuren 2 und 3 ist das Ventil 13a und der Ventilboden nach dem Abnehmen vom Füllrohr 12 noch nicht in einem flachen Zustand, sondern das Ventil befindet sich noch in einem rohrartigen Zustand. Die Ventilverschließeinrichtung 14 ist deshalb an der dem jeweiligen Füllrohr 12 zugewandten Stirnseite mit einem Führungselement und einem Formelement versehen. Gemäß den dargestellten Ausführungen besteht das Führungselement aus einem schwenkbaren, plattenförmigen Andrückelement 16, welches mittels einer Kolbenzylindereinheit 17 um eine der Einlaufseite abgewandt liegende horizontale Achse 18 schwenkbar ist. Bevor der Ventilsack mit seinem Ventil 13a in den Bereich des Andrückelementes 16 transportiert wird, steht es zur Bildung eines Einlaufkeiles in einer Schräglage. Die Achse 18 steht quer zur Durchlaufrichtung der Ventilsäcke 13. Unterhalb des Andrückelementes 16 ist ein Streck- und Glättelement 19 gelagert, welches um eine in Durchlaufrichtung der Ventilsäcke liegende horizontale Achse von einem Motor 28 aus rotierend antreibbar ist. Das Streckund Glättelement 19 und das Andrückelement 16 bilden im Zusammenspiel eine Führung für das Ventil 13 des Ventilsackes 13. Das Streck- und Glättelement 19 ist als Käfig ausgebildet, wie die Figuren zeigen. Entgegen der Darstellung kann es auch als Bürste ausgebildet sein. Entgegen der Durchlaufrichtung der Ventilsäcke 13 ist es konisch ausgebildet, so dass der Einlaufspalt noch verstärkt wird. In nicht näher dargestellter Weise wird zumindest das Andrückelement 16 über Lichtschranken bzw. die Kolbenzylindereinheit 17 gesteuert. Sobald der Verschließbereich des Ventils vollständig unterhalb des plattenförmigen Andrückelementes 16 steht, fährt die Kolbenstange der Kolbenzylindereinheit 17 aus. Das Streck- und Glättelement 19 wird mit Blick auf die Ventilverschließeinrichtung 14 vom Füllrohr 12 aus im Uhrzeigersinn angetrieben, so dass der untere Bereich des Ventils und gegebenenfalls des Bodens nach oben gezogen wird. In Durchlaufrichtung der Ventilsäcke 13 gesehen ist unmittelbar hinter dem Andrückelement 16 die Ultraschallschweißeinrichtung 20 montiert. Der Amboss ist als Ambossrad 21 ausgebildet, und dieser wird über einen Servomotor 27 und einen nicht dargestellten Antriebszug entsprechend der Durchlaufrichtung der Ventilsäcke 13 angetrieben. Oberhalb ist die Sonotrode 22 angeordnet, die bei der Ausführung nach der Fig. 2 fest steht. Die gesamte Ultraschallschweißeinrichtung 20 ist um einen Bolzen 23 schwenkbar. Damit kann der Abstand zwischen dem Ambossrad 21 und der Sonotrode 22 eingestellt werden, wobei ein Mindestabstand zu beachten ist, damit kein erhöhter Verschleiß auftritt. Die genaue Justierung erfolgt durch eine verdrehbare Stellschraube 24. Die gesamte Ventilverschließeinrichtung 14 hängt an einer Konsole 26, die in wenigstens einer vertikalen Säule geführt ist. Mittels eines nicht näher erläuterten Antriebes kann die gesamte Ventilverschließeinrichtung 14 in vertikaler Richtung verfahren werden. Dies dient nicht nur zur Justierung gegenüber den Füllrohren 12 des Rotors 11, sondern auch zur Freigabe der Umlaufbahn eines noch nicht ganz gefüllten, an einem Füllrohr 12 hängenden Sackes während einer weiteren Umdrehung.

Die Ausführung nach der Fig. 3 unterscheidet sich von der Ausführung nach der Fig. 2 dadurch, dass die Sonotrode als Sonotrodenrad 22 ausgebildet ist, welches von einem Antriebsmotor 29 antreibbar ist. Der Antrieb für das Ambossrad 21 kann in diesem Falle entfallen.

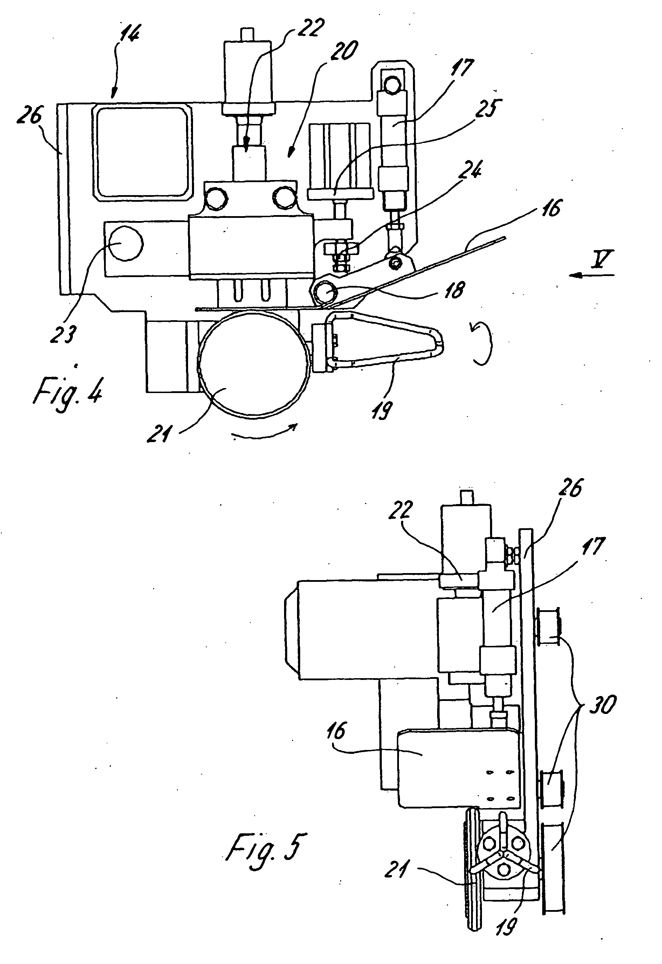

Die Ventilverschließeinrichtung 14 gemäß der Fig. 4 entspricht der Ausführung nach der Fig. 2. Es wird hier deutlich gezeigt, dass an der Einlaufseite ein Einführspalt durch das Andrückelement 16 und das Streckelement 19 gebildet wird. Die Verschwenkung der Ultraschallschweißeinrichtung 20 durch die Kolbenzylindereinheit 25 bietet den Vorteil, dass eine Ausgleichsbewegung stattfinden kann, da die Ventile bzw. die Ventilböden im Verschließbereich in der Dicke schwanken können.

Die Fig. 5 zeigt die Verschließeinrichtung gemäß den Fig. 2 und 4 in einer Draufsicht. Es ist deutlich erkennbar, dass die gesamte Verschließeinrichtung an einer Konsole 26 aufgehängt ist.

Die Erfindung ist nicht auf die dargestellten Ausführungsbeispiele beschränkt. Wesentlich ist, dass unabhängig von der Anzahl der Füllrohre 12 des Rotors 11 die gefüllten Ventilsäcke eine Ventilverschließeinrichtung 14 durchlaufen, die kontinuierlich arbeitet, so dass die den Füllrohren 12 zugeordneten Ventilverschließeinrichtungen entfallen können.

## Patentansprüche

1. Anlage (10) zum Füllen von Ventilsäcken (13) und anschließendem Verschließen der Ventile (13a), die mit einer rotierenden Füllmaschine ausgestattet ist, die einen Rotor (11) enthält, der mit mehreren Füllrohren (12) bestückt ist, auf die die Ventile (13a) der zu füllenden Ventilsäcke (13) aufsteckbar sind, wobei die Anlage (10) derart ausgelegt ist, dass die Ventile (13a) mittels einer einzigen, im Ultraschallschweißverfahren arbeitenden, einen Amboss (21) und eine Sonotrode (22) aufweisenden sowie außerhalb des äußeren Drehkreises des ventilsackfreien Rotors (11) längs einer Führungsbahn verstellbar aufgestellten Ventilverschließeinrichtung (14) verschließbar sind, **dadurch gekennzeichnet, dass** die Ventilverschließeinrichtung (14) im Normalbetrieb zumindest teilweise sowie stationär in der Umlaufbahn der auf die Füllrohre (12) des Rotors (11) aufgesteckten Ventilsäcke (13) liegt, dass die Ventilverschließeinrichtung (14) mit Führungs- und/oder Formelementen (16, 19) für die Verschließbereiche der Ventile (13a) der kontinuierlich durchlaufenden Ventilsäcke (13) versehen ist, und dass die Ventilverschließeinrichtung (14) bei Durchlauf eines nicht vollständig gefüllten, während einer weiteren Drehung des Rotors (11) auf dem Füllrohr (12) verbleibenden Ventilsackes (13) ausschließlich längs der ortsfesten Führungsbahn aus der Umlaufbahn der Ventilsäcke (13) verfahrbar ist.

2. Anlage nach Anspruch 1, **dadurch gekennzeichnet, dass** den Führungs- und/oder Formelementen (16, 19) der Amboss (21) und die Sonotrode (22) der Ventilverschließeinrichtung (14) nachgeschaltet sind.

3. Anlage nach Anspruch 1. **dadurch gekennzeichnet, dass** der von dem Amboss (21) und der Sonotrode (22) der Ultraschallschweißeinrichtung (20) gebildete Durchlaufspalt höhenmäßig im Bereich der Mittellängsachsen der Füllrohre (12) liegt.

4. Anlage nach Anspruch 1, **dadurch gekennzeichnet, dass** die ortsfeste Führungsbahn vertikal angeordnet ist.

5. Anlage nach Anspruch 1, **dadurch gekennzeichnet, dass** die Ventilverschließeinrichtung (14) zur Höhenverstellung mit einem Stellantrieb versehen ist.

6. Anlage nach Anspruch 1, **dadurch gekennzeichnet, dass** die Führungselemente aus einer von oben auf den Verschließbereich des Ventils (13a) aufsetzbaren Andrückelement (16) gebildet ist, welches um eine horizontale sowie quer zur Durchlaufrichtung der Ventitsäcke (13) stehenden Achse (18) schwenkbar ist, und dass die Formelemente aus einem Streck- und Glättelement (19) bestehen, welches um eine in der Durchlaufrichtung des Ventilsäcke (13) verlaufende Achse, rotierend antreibbar ist, so dass das Ventil von unten, von dem dem Ventilboden gegenüberliegenden Boden des Ventilsackes (13) aus in einen flachen Zustand verformbar ist.

7. Anlage nach Anspruch 6, **dadurch gekennzeichnet, dass** das Andrückelement (16) als Andrückplatte oder Andrückschuh ausgebildet und mittels einer Kotbenzylindereinheit (17) schwenkbar ist.

8. Anlage nach Anspruch 6, **dadurch gekennzeichnet, dass** das Streck- und Glättelement (19) unterhalb des Andrückelementes (16) angeordnet ist und aus einem rotierend antreibbaren Käfig oder einer Bürste besteht, der bzw. die zur Einlaufseite der Ventilsäcke hin sich im Querschnitt verkleinert.

9. Anlage nach einem oder mehreren der vorhergehenden Ansprüche 1 bis 8, **dadurch gekennzeichnet, dass** die der Ventilverschließeinrichtung (14) zugeführten Säcke mit dem Rotor (11) der Anlage (10) in einer Mitnahmeverbindung stehen.

10. Anlage nach Anspruch 1, **dadurch gekennzeichnet, dass** der Amboss der Ultraschallschweißeirichtung (20) als rotierend antreibbares Ambossrad (21) ausgebildet und auf einer ortsfesten, rotierend antreibbaren Welle drehfest aufgesetzt ist.

11. Anlage nach einem oder mehreren der vorhergehenden Ansprüche 1 bis 10, **dadurch gekennzeichnet, dass** die die Sonotrode (22) enthaltende Ultraschallschweißeinheit an einem Schwenkhebel angeordnet ist, und dass der Abstand zwischen dem Ambossrad und der Sonotrode mittels eines einstellbaren Anschlages (24) einstellbar ist, wobei eine definierte Andrückkraft durch eine Kolben-Zylinder-Einheit (25) erzeugbar ist.

12. Anlage nach Anspruch 1, **dadurch gekennzeichnet, dass** zumindest die Sonotrode der Ultraschallschweißvorrichtung (20) als rotierend antreibbares Sonotrodenrad (22) ausgebildet ist, und dass der Amboss (21) die Sonotrode (22) die Führungs- und die Formelemente (16, 19) an der dem Rotor (11) der Anlage (10) abgewandten Seite angeordnet sind.

13. Anlage nach einem oder mehreren der vorhergehenden Ansprüche 1 bis 12, **dadurch gekennzeichnet, dass** die Ventilverschließeinrichtung (14) als Baueinheit an einer Konsole (26) angeordnet und mittels eines Stellantriebes höhenverstellbar ist.

## Claims

1. Installation (10) for filling valve sacks (13) and subsequently closing the valves (13a), said installation being equipped with a rotary filling machine that contains a rotor (11), which is fitted with a plurality of filling tubes (12), onto which the valves (13a) of the valve sacks (13) to be filled can be plugged, wherein the installation (10) is designed such that the valves (13a) can be closed by means of a single valve closing device (14) which operates using the ultrasonic welding method, has an anvil (21) and a sonotrode (22) and outside the outer turning circle of the valve-sack-free rotor (11) is set up in an adjustable manner along a guide track, **characterized in that**, during normal operation, the valve closing device (14) is located at least partially and in a stationary manner in the circulatory path of the valve sacks (13) plugged onto the filling tubes (12) of the rotor (11), **in that** the valve closing device (14) is provided with guiding and/or forming elements (16, 19) for the closing regions of the valves (13a) of the valve sacks (13) that are continuously passing through, and **in that**, when a valve sack (13) that has not been completely filled and remains on the filling tube (12) for a further rotation of the rotor (11), the valve closing device (14) can be moved out of the circulatory path of the valve sacks (13) exclusively along the positionally fixed guide path.

2. Installation according to Claim 1, **characterized in that** the anvil (21) and the sonotrode (22) of the valve closing device (14) are connected downstream of the guiding and/or forming elements (16, 19).

3. Installation according to Claim 1, **characterized in that** the height of the passage gap formed by the anvil (21) and the sonotrode (22) of the ultrasonic welding device (20) is located in the region of the central longitudinal axes of the filling tubes (12).

4. Installation according to Claim 1, **characterized in that** the positionally fixed guide path is arranged in a vertical manner.

5. Installation according to Claim 1, **characterized in that** the valve closing device (14) is provided with an actuating drive in order to adjust the height.

6. Installation according to Claim 1, **characterized in that** the guide elements are formed from a pressure element (16) which can be placed from above onto the closing region of the valve (13a) and which can be pivoted about a horizontal axle (18) positioned transversely with respect to the passage direction of the valve sacks (13), and **in that** the forming elements consist of a stretching and smoothing element (19), which can be driven in rotation about an axle extending in the passage direction of the valve sacks (13), and so the valve can be deformed into a flat state from below starting from the bottom, opposite the valve bottom, of the valve sack (13).

7. Installation according to Claim 6, **characterized in that** the pressure element (16) is in the form of a pressure plate or pressure shoe and can be pivoted by means of a piston cylinder unit (17).

8. Installation according to Claim 6, **characterized in that** the stretching and smoothing element (19) is arranged below the pressure element (16) and consists of a cage that can be driven in rotation or a brush, the cross section of said cage or brush becoming smaller towards the inlet side of the valve sacks.

9. Installation according to one or more of the preceding Claims 1 to 8, **characterized in that** the sacks supplied to the valve closing device (14) are in driving connection with the rotor (11) of the installation (10).

10. Installation according to Claim 1, **characterized in that** the anvil of the ultrasonic welding device (20) is in the form of an anvil wheel (21) that can be driven in rotation and said anvil is placed in a rotationally fixed manner on a positionally fixed shaft that can be driven in rotation.

11. Installation according to one or more of the preceding Claims 1 to 10, **characterized in that** the ultrasonic welding unit containing the sonotrode (22) is arranged on a pivot lever, and **in that** the spacing between the anvil wheel and the sonotrode can be varied by a variable stop (24), wherein a defined pressure force can be produced by a piston cylinder unit (25).

12. Installation according to Claim 1, **characterized in that** at least the sonotrode of the ultrasonic welding apparatus (20) is in the form of a sonotrode wheel (22) that can be driven in rotation, and **in that** the anvil (21), the sonotrode (22) and the guiding and forming elements (16, 19) are arranged on the side remote from the rotor (11) of the installation (10).

13. Installation according to one or more of the preceding Claims 1 to 12, **characterized in that** the valve closing device (14) is arranged as a component on a console (26) and its height can be adjusted by means of an actuating drive.

## Revendications

1. Installation (10) pour le remplissage de sacs à soupape (13) et l'obturation consécutive de soupapes (13a), munie d'une machine de remplissage rotative qui comprend un rotor (11) équipé de plusieurs tuyaux de remplissage (12) sur lesquels les soupapes (13a) des sacs à soupape (13) à remplir sont embrochables, l'installation (10) étant prévue de manière à pouvoir obturer les soupapes (13a) au moyen d'un seul dispositif d'obturation de soupape (14) fonctionnant par procédé de soudage par ultrasons, comportant une enclume (21) et une sonotrode (22) et monté de manière réglable le long d'un trajet de guidage en dehors du cercle de rotation extérieur du rotor (11) exempt de sacs à soupape, **caractérisée en ce qu'**en service normal, le dispositif d'obturation de soupape (14) est disposé au moins en partie et de manière fixe sur la trajectoire circonférentielle des sacs à soupape (13) embrochés sur les tuyaux de remplissage (12) du rotor (11), **en ce que** le dispositif d'obturation de soupape (14) est pourvu d'éléments de guidage et/ou de formage (16, 19) pour les zones d'obturation des soupapes (13a) des sacs à soupape (13) avançant continuellement, et **en ce qu'**au passage d'un sac à soupape (13) incomplètement rempli et resté sur le tuyau de remplissage (13) lors d'une nouvelle rotation du rotor (11), le dispositif d'obturation de soupape (14) est exclusivement déplaçable sur la trajectoire de guidage fixe depuis la trajectoire circonférentielle des sacs à soupape (13).

2. Installation selon la revendication 1, **caractérisée en ce que** l'enclume (21) et la sonotrode (22) sont disposés en aval des éléments de guidage et/ou de formage (16, 19) du dispositif d'obturation de soupape (14).

3. Installation selon la revendication 1, **caractérisée en ce que** l'interstice de passage formé par l'enclume (21) et la sonotrode (22) du dispositif de soudage par ultrasons (20) est situé au niveau de hauteur des axes longitudinaux médians des tuyaux de remplissage (12).

4. Installation selon la revendication 1, **caractérisée en ce que** la trajectoire de guidage fixe est verticale.

5. Installation selon la revendication 1, **caractérisée en ce que** le dispositif d'obturation de soupape (14) est pourvu d'un actionneur pour le réglage de hauteur.

6. Installation selon la revendication 1, **caractérisée en ce que** les éléments de guidage sont formés d'un élément de compression (16) applicable par le haut sur la zone d'obturation de la soupape (13a) et qui est pivotant autour d'un axe (18) horizontal et transversalement à la direction de passage des sacs à soupape (13), et **en ce que** les éléments de formage se composent d'un élément d'étirage et de lissage (19) qui est entraînable en rotation autour d'un axe s'étendant dans la direction de passage des sacs à soupape (13), si bien que la soupape est déformable en état d'aplatissement par le bas, depuis le fond du sac à soupape opposé au fond de la soupape.

7. Installation selon la revendication 6, **caractérisée en ce que** l'élément de compression (16) est réalisé comme plaque de compression ou patin de compression, et est pivotant au moyen d'une unité de cylindre à piston (17).

8. Installation selon la revendication 6, **caractérisée en ce que** l'élément d'étirage et de lissage (19) est disposé en dessous de l'élément de compression (16), et est composé d'une cage entraînable en rotation ou d'une brosse, dont la section diminue dans la direction du côté d'admission des sacs à soupape.

9. Installation selon l'une ou plusieurs des revendications précédentes 1 à 8, **caractérisée en ce que** les sacs amenés au dispositif d'obturation de soupape (14) sont en liaison d'entraînement avec le rotor (11) de l'installation (10).

10. Installation selon la revendication 1, **caractérisée en ce que** l'enclume du dispositif de soudage par ultrasons (20) est réalisée comme roue d'enclume (21) entraînable en rotation et est appliquée sur un arbre fixe entraînable en rotation avec lequel elle est solidaire en rotation.

11. Installation selon l'une ou plusieurs des revendications précédentes 1 à 10, **caractérisée en ce que** l'unité de soudage par ultrasons contenant la sonotrode (22) est disposée sur un levier pivotant, et **en ce que** l'espacement entre la roue d'enclume et la sonotrode est ajustable au moyen d'une butée (24) réglable, une force de compression définie pouvant être générée par une unité de cylindre à piston (25).

12. Installation selon la revendication 1, **caractérisée en ce qu'**au moins la sonotrode du dispositif de soudage par ultrasons (20) est réalisée comme roue de sonotrode (22) entraînable en rotation, et **en ce que** l'enclume (21), la sonotrode (22), les éléments de guidage et les éléments de formage (16, 19) sont disposés sur le côté de l'installation (10) distant du rotor (11).

13. Installation selon l'une ou plusieurs des revendications précédentes 1 à 12, **caractérisée en ce que** le dispositif d'obturation de soupape (14) est disposé comme unité de construction sur une console (26) et est réglable en hauteur au moyen d'un actionneur.
